(19) **Europäisches Patentamt / European Patent Office / Office européen des brevets**

(11) **EP 2 786 320 B1**

(12) **FASCICULE DE BREVET EUROPEEN**

(45) Date de publication et mention de la délivrance du brevet:
**05.01.2022  Bulletin 2022/01**

(21) Numéro de dépôt: **12799115.6**

(22) Date de dépôt: **30.11.2012**

(51) Int Cl.:
**G06Q 10/04** *(2012.01)*   **G06Q 10/06** *(2012.01)*

(86) Numéro de dépôt international:
**PCT/EP2012/074161**

(87) Numéro de publication internationale:
**WO 2013/079700 (06.06.2013 Gazette 2013/23)**

(54) **PROCEDE D'ESTIMATION DE LA STABILITE D'UN SYSTEME ELECTRIQUE**

VERFAHREN ZUR BESTIMMUNG DER STABILITÄT EINES ELEKTRISCHEN SYSTEMS

METHOD OF ESTIMATING THE STABILITY OF AN ELECTRICAL SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.12.2011  FR 1161087**

(43) Date de publication de la demande:
**08.10.2014  Bulletin 2014/41**

(73) Titulaires:
- **Schneider Electric Industries SAS
  92500 Rueil-Malmaison (FR)**
- **Association pour la Recherche et le Développement
  des Méthodes et Processus Industriels
  75272 Paris Cedex 6 (FR)**

(72) Inventeurs:
- **MAIZI, Nadia
  F-06600 Antibes (FR)**
- **DROUINEAU, Mathilde
  38050 Grenoble Cedex 09 (FR)**
- **MAZAURIC, Vincent
  F-38000 Grenoble (FR)**
- **BOUCKAERT, Stéphanie
  F-06410 Biot (FR)**

(74) Mandataire: **Novaimo
Europa 1
362, avenue Marie Curie
Archamps Technopole
74166 Saint-Julien-en-Genevois Cedex (FR)**

(56) Documents cités:
**EP-A2- 2 327 149   US-A1- 2003 200 010**

- **EPO: "Mitteilung des Europäischen Patentamts vom 1. Oktober 2007 über Geschäftsmethoden = Notice from the European Patent Office dated 1 October 2007 concerning business methods = Communiqué de l'Office européen des brevets,en date du 1er octobre 2007, concernant les méthodes dans le domaine des activités", JOURNAL OFFICIEL DE L'OFFICE EUROPEEN DES BREVETS.OFFICIAL JOURNAL OF THE EUROPEAN PATENT OFFICE.AMTSBLATTT DES EUROPAEISCHEN PATENTAMTS, OEB, MUNCHEN, DE, vol. 30, no. 11, 1 novembre 2007 (2007-11-01), pages 592-593, XP007905525, ISSN: 0170-9291**
- **MA H T ET AL: "Working towards frequency regulation with wind plants: combined control approaches", IET RENEWABLE POWER GENERA,, vol. 4, no. 4, 7 July 2010 (2010-07-07), pages 308-316, XP006035834, ISSN: 1752-1424, DOI: 10.1049/IET-RPG:20090100**

**Description**

La présente invention concerne un procédé de gestion d'un système électrique, un programme informatique et une unité de gestion mettant en œuvre un tel procédé. Elle concerne aussi un système électrique en tant que tel mettant en œuvre un tel procédé de gestion.

Un système électrique comprend des unités de production d'électricité, comme des centrales à charbon, au gaz, des centrales nucléaires, des barrages permettant d'exploiter l'énergie hydraulique, des sources d'énergie renouvelables complémentaires comme des sources solaires ou des éoliennes. Ces unités de production d'électricité peuvent être cumulées dans un même système. Ensuite, un système électrique comprend des unités de consommation d'électricité, qui peuvent être des habitations, des usines, des véhicules, etc. Enfin, un système électrique comprend un réseau de distribution d'électricité, qui relie les unités de production et les unités de consommation d'électricité afin de transporter l'électricité jusqu'à ces unités de consommation.

Une complexité de la gestion d'un système électrique provient du fait qu'il est soumis en permanence à des aléas de production et/ou de consommation, et que l'équilibre entre l'offre et la demande doit pourtant être garanti à chaque instant, ce qui n'est pas toujours vrai dans l'état de la technique.

Pour répondre à cette contrainte, le réseau de distribution électrique est régulé en tension et en fréquence dans l'état de la technique, de sorte que la tension distribuée reste entre plus ou moins 5 ou 10% autour d'une valeur de consigne prédéfinie et la fréquence à plus ou moins 1% d'une valeur de consigne prédéfinie (50 Hz en Europe). Dans la pratique, le réseau de distribution d'électricité est représenté comme un ensemble de nœuds et de mailles, dont le comportement électrique est modélisé par les équations de Kirchhoff. D'autre part, la fréquence du réseau résulte du couplage électromécanique présent au niveau des alternateurs des unités de production d'électricité. Ces alternateurs étant nombreux, chacun d'entre eux subit l'influence de tous les autres et l'ensemble se comporte comme si le réseau de distribution impose sa fréquence à chaque alternateur et donc la fréquence du réseau. Ce phénomène est couramment appelé « synchronisme ».

Finalement, la gestion pratique d'un réseau de distribution d'électricité repose sur un procédé qui mesure la fréquence au niveau de quelques points du réseau, notamment au niveau de chaque unité de production, et la tension en tout ou partie des nœuds, et la régulation du réseau cherche à maintenir les valeurs de tension et fréquence à leurs valeurs de consigne, sur la base de la résolution des équations de Kirchhoff pour connaître l'ensemble du réseau. Pour optimiser cette approche, des solutions comme celle décrite dans le document EP2330525 proposent des méthodes permettant d'accélérer la résolution de ces équations.

Le document EP2224570 décrit une autre solution qui prévoit de relier au réseau de distribution d'électricité des dispositifs de stockage d'électricité. Ces approches permettent d'atteindre aujourd'hui un résultat suffisant par le fait que la capacité totale de production des unités de production est en général largement supérieure à la consommation totale des unités de consommation. Ainsi, grâce à cette situation favorable, le réseau de distribution reste convenable sans nécessiter d'adaptation ou d'optimisation particulière.

Le document EP2327149 expose le principe fondamental de la dynamique d'un système électrique.

Le document US2003/0200010 décrit une solution pour évaluer la stabilité d'un système de production d'énergie qui repose sur le calcul d'un paramètre d'énergie.

Le document « Math et al : Working towards frequency regulation with wind plants combined control approaches » décrit la dynamique de l'évolution de l'énergie cinétique d'un système électrique.

Si les unités de production deviennent moins importantes relativement aux besoins des unités de consommation, une situation de soudaine augmentation de la demande de ces unités de consommation ou une défaillance accidentelle d'une unité de production entraîne un risque de propagation d'une chute de tension et/ou d'un écroulement de la fréquence sur l'ensemble du réseau de distribution électrique. Une telle situation peut entraîner la coupure de distribution d'électricité dans tout ou partie du système électrique. Il est donc important de garantir la stabilité d'un réseau de distribution d'électricité, pour réduire au maximum les coupures de distribution d'électricité, en faisant face aux éventuels incidents et aux situations particulières défavorables.

D'autre part, il existe aujourd'hui une évolution des systèmes électriques, dont les unités de production d'électricité se diversifient, incluant une part de plus en plus importante de sources d'énergie renouvelable, souvent intermittente et plus difficile à gérer. En parallèle, le besoin des unités de consommation augmente. Dans ce contexte, on ne dispose pas de méthode permettant d'évaluer le niveau de fiabilité des futures architectures du réseau de distribution d'électricité, ni de garantir la pertinence de leur gestion avec les approches existantes.

En résumé, les approches de l'état de la technique ne permettent pas de répondre aux questions de gestion optimale d'un système électrique. Notamment, les approches de calcul sur la base de la modélisation électrique, basée sur la résolution des lois de Kirchhoff, recherchant à déterminer en temps réel l'état du système atteignent les limites suivantes :

- les équations sont complexes à résoudre du fait du nombre très important de nœuds du réseau de distribution électrique ;

- les données de communication qui transitent entre les composants du système électrique sur le réseau, qui se déplacent à la vitesse de la lumière, ne vont pas assez vite pour permettre une réaction suffisamment rapide pour faire face à un incident, durant lequel la propagation d'une défaillance sur le réseau se déplace de même à une vitesse très importante. Pour cela, il est obligatoire de disposer de moyens dédiés pour gagner du temps en cas de défaillance. La gestion en temps réel est en réalité impossible, du fait des limites de la physique.

Finalement, il existe un besoin d'une solution permettant de gérer au mieux la distribution d'électricité d'un système électrique.

Plus précisément, un objet est de définir une solution permettant d'améliorer la gestion d'un système électrique, notamment sa stabilité.

A cet effet, l'invention repose sur un procédé de gestion d'un système électrique selon la revendication 1.

Le système électrique comprend des unités de production d'électricité, des unités de consommation d'électricité, et un réseau de distribution d'électricité reliant les unités de production d'électricité aux unités de consommation d'électricité, et le procédé peut comprendre une étape d'estimation d'au moins un paramètre de stabilité du système électrique basé sur les réserves d'énergie magnétique et/ou cinétique qu'il accumule à partir d'un calcul mis en œuvre par au moins un composant logiciel et/ou matériel d'une unité de gestion du système électrique.

Le procédé de gestion d'un système électrique peut prendre en compte les deux paramètres de stabilité du système électrique qui représentent respectivement la durée pendant laquelle les réserves d'énergie magnétique et cinétique du système électrique s'épuisent totalement ou partiellement, si toute la production d'électricité du système électrique est stoppée ou déconnectée du système électrique ou si le système électrique subit une fluctuation.

Les deux paramètres de stabilité $H_{cin}$ et $H_{mag}$ du système électrique peuvent être définis de la manière suivante :

$$H_{cin} = \frac{E_{cin}}{S} \qquad et \qquad H_{mag} = \frac{F}{S}$$

où

$E_{cin}$ désigne l'énergie cinétique des différents organes constituant le système électrique,
F représente l'énergie magnétique des différents organes constituant le système électrique,
S désigne la puissance apparente nominale des différents organes de génération d'électricité du système électrique,
ou les deux paramètres de stabilité $H'_{cin}$ et $H'_{mag}$ du système électrique peuvent être définis de la manière suivante :

$$H'_{cin} = \frac{E_{cin}}{\Delta S} \qquad et \qquad H'_{mag} = \frac{F}{\Delta S}$$

où $\Delta S$ représente une variation de puissance apparente du système électrique.

Les deux paramètres de stabilité du système électrique peuvent être définis à partir des caractéristiques des alternateurs des unités de production d'électricité du système électrique connectés au système électrique.

Le procédé de gestion d'un système électrique peut comprendre une étape de calcul du ou des paramètres de stabilité du système électrique à partir du bilan de puissance du système électrique, puis comprendre une étape d'analyse de deux régimes transitoires distincts, un régime transitoire durant lequel le bilan de puissance considère la variation de l'énergie magnétique du système électrique à énergie cinétique considérée constante, et un régime transitoire durant lequel le bilan de puissance considère la variation de l'énergie cinétique du système électrique à énergie magnétique considérée constante.

Le bilan de puissance du système électrique peut être calculé à partir d'une modélisation thermodynamique du système électrique et se définir par l'équation suivante :

$$P_{meca\text{-}in} = P_{meca\text{-}out} + P_{Joule} + \frac{dF}{dt} + \frac{dE_{cin}}{dt}$$

Où

- $E_{cin}$ désigne l'énergie cinétique emmagasinée dans les différents organes du système électrique ;

- $P_{meca-in}$ désigne la puissance mécanique fournie au système par l'arbre des turbines des alternateurs ;
- $P_{meca-out}$ désigne la puissance mécanique produite par les moteurs;
- $P_{joule}$ représente la chaleur soutirée au système électrique ;
- F représente l'énergie magnétique emmagasinée dans les différents organes du système électrique.

Le procédé de gestion d'un système électrique peut comprendre une étape de mesure de grandeurs de fonctionnement du système électrique par des capteurs, comme des grandeurs électriques du système électrique comme la fréquence et la tension, et l'étape d'estimation d'au moins un paramètre de stabilité du système électrique basé sur la réserve magnétique et/ou cinétique qu'il accumule peut prendre en compte au moins une mesure d'une grandeur de fonctionnement mesurée du système électrique.

L'étape d'estimation d'au moins un paramètre de stabilité du système électrique basé sur la réserve magnétique et/ou cinétique qu'il accumule peut prendre en compte la réserve magnétique et/ou cinétique sur une ou plusieurs sous-partie(s) du système électrique pour en déduire finalement la réserve magnétique et/ou cinétique globale cumulée du système électrique.

Le procédé de gestion d'un système électrique peut comprendre une étape de comparaison du ou des paramètre(s) de stabilité du système électrique basé sur la réserve magnétique et/ou cinétique qu'il accumule avec une valeur seuil pour déterminer si le système électrique est suffisamment stable.

La valeur seuil peut être calculée de manière théorique, en considérant comme hypothèse qu'un système électrique est fiable si sa réserve d'énergie magnétique et/ou cinétique lui permet une variation minimale de fréquence et/ou de tension, ou d'une ou de plusieurs autres grandeurs électriques, pendant une durée minimale imposée, ou cette valeur seuil peut être déterminée de manière empirique, à partir d'un système électrique considéré comme fiable, pour lequel le ou les paramètres de stabilité sont connus et servent de référence.

Le procédé de gestion d'un système électrique peut comprendre la mise en œuvre de tout ou partie des actions suivantes en fonction d'au moins un paramètre de stabilité du système électrique basé sur la réserve magnétique et/ou cinétique qu'il accumule :

- réduction de la consommation globale d'électricité ;

- augmentation de la production globale d'électricité ;

- mise en fonctionnement ou arrêt d'un ou plusieurs dispositifs d'accumulation d'énergie cinétique et/ou magnétique.

Le procédé de gestion d'un système électrique peut comprendre la définition de l'architecture d'un nouveau système électrique ou de la modification d'un système électrique existant en fonction de l'estimation d'au moins un paramètre de stabilité du système électrique basé sur la réserve magnétique et/ou cinétique qu'il accumulera.

Le procédé de gestion d'un système électrique peut déterminer le taux maximal acceptable des unités de production d'électricité renouvelable intermittente, comme à base d'énergie éolienne et/ou solaire, en fonction de l'estimation d'au moins un paramètre de stabilité du système électrique basé sur la réserve magnétique et/ou cinétique qu'il accumulera.

Le procédé de gestion d'un système électrique peut comprendre une étape de planification de l'évolution d'un système électrique de sorte qu'il possède au moins un paramètre de stabilité basé sur la réserve magnétique et/ou cinétique qu'il accumulera au-dessus d'un seuil.

L'invention porte aussi sur un programme informatique comprenant un moyen de codes adapté à la réalisation des étapes d'un procédé de gestion d'un système électrique tel que décrit précédemment lorsque le programme informatique est exécuté sur un calculateur.

L'invention porte aussi sur une unité de gestion d'un système électrique, caractérisée en ce qu'elle comprend un calculateur qui met en œuvre un procédé de gestion d'un système électrique tel que décrit précédemment.

Le système électrique comprenant des unités de production d'électricité, des unités de consommation d'électricité, et un réseau de distribution d'électricité reliant les unités de production d'électricité aux unités de consommation d'électricité, peut comprendre une unité de gestion qui met en œuvre un procédé de gestion d'un système électrique tel que décrit précédemment.

Le système électrique peut comprendre des dispositifs de communication pour la transmission vers l'unité de gestion des mesures de grandeurs électriques provenant de capteurs du système électrique et pour la transmission de l'unité de gestion de commandes à des actionneurs du système électrique.

Ces objets, caractéristiques et avantages de la présente invention seront exposés en détail dans la description suivante d'un mode d'exécution particulier fait à titre non-limitatif en relation avec les figures jointes parmi lesquelles :

La figure 1 représente schématiquement un système électrique selon un mode de réalisation de l'invention.

La figure 2 représente le système électrique selon un mode de réalisation de l'invention avec une approche thermodynamique.

La figure 3 représente schématiquement l'évolution dans le temps de grandeurs du système électrique lors d'un scénario d'incident selon le mode de réalisation de l'invention.

La figure 4 représente l'évolution des variations de fréquence et de tension en fonction des critères de stabilité au sein d'un système électrique selon le mode de réalisation de l'invention.

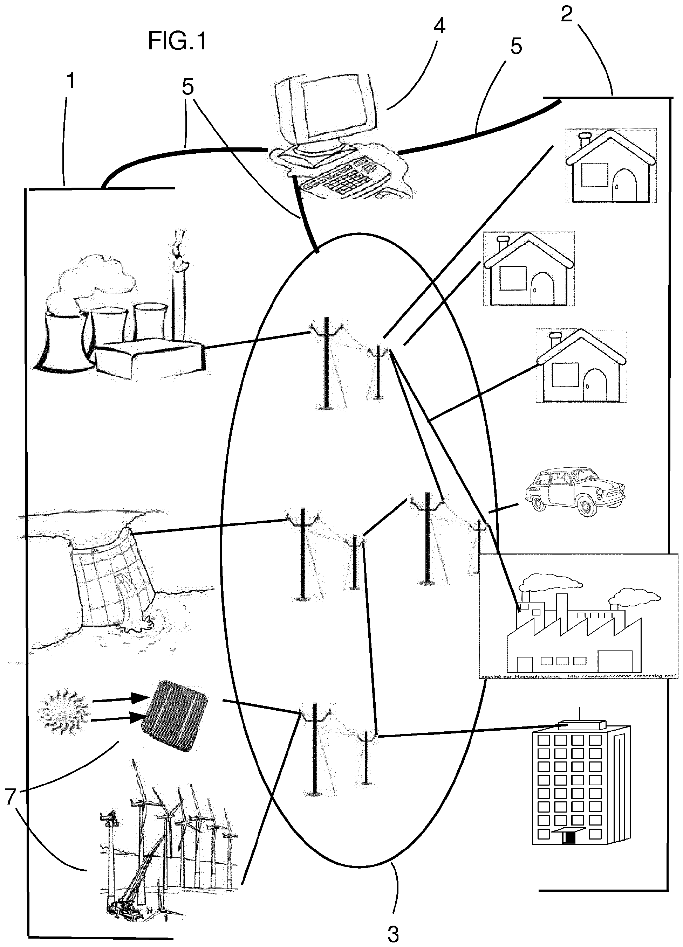

La figure 1 représente schématiquement un système électrique selon un mode d'exécution de l'invention. Ce système électrique comprend des unités de production d'électricité 1, qui peuvent absorber ou fournir une puissance sur le réseau de distribution d'électricité 3 pour alimenter plusieurs unités de consommation d'électricité 2. Les unités de production d'électricité 1 et de consommation d'électricité 2 comprennent des actionneurs qui respectivement produisent et consomment de l'énergie électrique. Les actionneurs de certaines unités de production sont plus particulièrement des alternateurs, et ceux des unités de consommation d'électricité sont par exemple des moteurs. Le système électrique peut de plus comprendre des unités de stockage d'énergie, non représentées, par exemple à base de moment d'inertie et/ou d'inductance.

Ce système électrique comprend un nombre important d'alternateurs, de sorte que la puissance globale échangée par le système électrique est grande devant celle de chaque alternateur. Une augmentation de la demande de puissance par les unités consommatrices induit l'augmentation de l'angle interne de tout ou partie des alternateurs, afin d'atteindre un nouveau point de fonctionnement stable, en fonction de l'inertie mécanique de ces alternateurs. Ces alternateurs sont de préférence des alternateurs synchrones.

Le système électrique comprend de plus des capteurs, non représentés, permettant de mesurer des grandeurs représentant l'état du système électrique, au niveau des unités de production, de consommation et du réseau de distribution, et des dispositifs de communication 5 entre ces capteurs et au moins une unité de gestion 4. Cette unité de gestion 4 reçoit ainsi des données mesurées par les capteurs et transmet des commandes vers des actionneurs du système électrique. Ce dernier, selon le mode de réalisation, peut ainsi intégrer les composants d'une architecture de réseau électrique intelligent appelée par sa dénomination anglo-saxonne de « smart grid » dans l'état de la technique. L'unité de gestion comprend au moins un calculateur et des éléments matériel (hardware) et logiciel (software) pour mettre en œuvre les étapes du procédé de gestion du système électrique qui va maintenant être détaillé. Le dispositif de communication 5 permet ainsi à l'unité de gestion 4 de transmettre automatiquement des instructions aux unités de production et/ou de consommation pour par exemple modifier les conditions de fonctionnement du système électrique et mettre en œuvre sa régulation.

Les approches de l'état de la technique pour la gestion d'un système électrique sont acceptables lorsque les systèmes électriques sont centralisés, c'est-à-dire comprennent un faible nombre de grosses unités de production associées à un centre de régulation, et sont synchrones, c'est-à-dire fonctionnent à une fréquence unique qui ne subit pas ou peu d'événements tendant à sa fluctuation. De plus, les composants de réserve énergétique de ces systèmes traditionnels de l'état de la technique sont principalement embarqués dans les alternateurs et disposés à proximité des organes de génération d'énergie. Toutefois, ces approches de l'état de la technique pour la gestion d'un système électrique ne sont plus acceptables dès que tout ou partie des caractéristiques d'un système électrique mentionnées ci-dessus ne sont plus vérifiées.

Par exemple, si les systèmes électriques présentent tout ou partie des particularités suivantes, ces approches traditionnelles ne sont plus adaptées :

-    un nombre important d'unités de production d'énergie à partir d'une source renouvelable, dont la particularité est qu'elles sont fortement fluctuantes et ne sont pas associées à des éléments de stockage ou de réserve d'énergie. Ainsi, des composants de réserve d'énergie distincts, éloignés géographiquement, et de natures différentes, peuvent être prévus sur de tels systèmes ;
-    un signal de courant électrique non homogène, par exemple du fait de la présence de parties de natures différentes, comme une présence de lignes en courant continu associées à une ferme éolienne.

Pour faire face à de tels systèmes électriques, un mode de réalisation de la présente invention repose sur une maîtrise de la stabilité d'un système électrique à partir d'une approche nouvelle qui va être décrite ci-dessous, et qui présente l'effet technique d'être :

-    indépendante de la nature des composants de production et de consommation du système électrique et du réseau de distribution ;
-    propice à un traitement en temps réel.

Ce mode de réalisation permet ainsi d'atteindre une gestion efficace automatique d'un système électrique quelconque, de faire face à des incidents et sources de fluctuation, d'éviter notamment le « black out » du système électrique. Il s'agit donc d'une invention qui procure un effet technique pour un résultat technique fondamental dans les sociétés modernes qui sont naturellement très dépendantes de leur système électrique.

Le procédé de gestion d'un système électrique repose sur une modélisation physique particulière du système électrique, qui va d'abord être décrite.

D'abord, nous considérons un alternateur d'une unité de production d'électricité, qui est une machine tournante qui joue un rôle particulier dans le comportement global du système électrique car son énergie cinétique atteint une valeur importante. L'équilibre mécanique d'un alternateur s'écrit selon :

$$P_{méca\text{-}ext} - P_{méca\text{-}int} = \frac{dE_{cin}}{dt}$$

Où

- $E_{cin}$ désigne l'énergie cinétique présente au sein de l'alternateur du fait de sa vitesse de rotation ;
- $P_{méca\text{-}ext}$ désigne la puissance mécanique fournie à l'alternateur, sa puissance d'entraînement ;
- $P_{méca\text{-}int}$ désigne la puissance mécanique effectivement cédée au système électrique par l'alternateur, qui est l'opposée de la puissance du couple résistant pour un alternateur.

Cette énergie cinétique peut s'écrire :

$$E_{cin} = \frac{1}{2} J \, \Omega^2$$

Où J désigne le moment d'inertie de l'alternateur, et $\Omega$ sa vitesse de rotation mécanique.

En terme électrique, on peut aussi écrire :

$$E_{cin} = \frac{1}{2} (J/p^2) \, \omega^2$$

Où $\omega$ représente la pulsation électrique et p le nombre de paire de pôles de l'alternateur.

Il est aussi utile d'introduire à ce stade la constante d'inertie H qui est une variable mesurant le rapport entre l'énergie cinétique d'un alternateur et sa puissance apparente nominale $S_n$ :

$$H = \frac{1}{2} J \, \Omega^2 / S_n$$

Ce qui s'écrit aussi $H = E_{cin}/ S_n$

Plus H est grand, plus l'énergie cinétique stockée dans l'alternateur est grande. Cette constante d'inertie H représente ainsi la robustesse de l'alternateur pour faire face aux fluctuations, puisque plus le stock d'énergie cinétique est important, plus il peut faire face à une fluctuation. Ce phénomène sera détaillé par la suite.

De manière similaire, un alternateur accumule une énergie magnétique, qui représente un stock complémentaire d'énergie, qui lui permet aussi de faire face à une fluctuation de ses conditions de fonctionnement, qui s'ajoute au stock d'énergie cinétique mentionné ci-dessus.

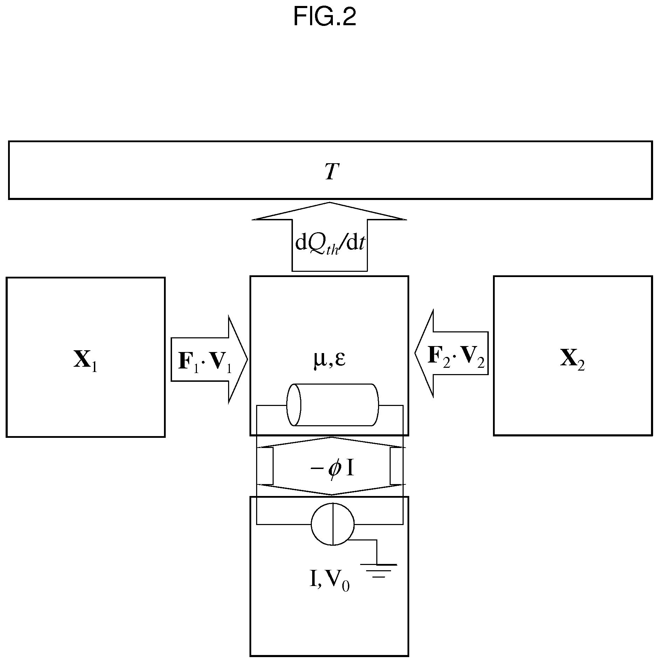

Le système électrique global est modélisé selon une approche thermodynamique représentée par la figure 2, sous la forme d'une machine monotherme représentée par une fonction d'état G appelée enthalpie libre, et dont les variables d'état sont essentiellement :

- la température T du thermostat (le plus souvent atmosphérique),
- la position des actionneurs connectés au système, directement liés au bilan de puissance mécanique subi par le système électrique selon l'équation $P_{méca\text{-}ext} - P_{méca\text{-}int} = dE_{cin}/dt$ :
  où $E_{cin}$ désigne l'énergie cinétique embarquée dans tout le système, $P_{méca\text{-}ext} = \Sigma F_i.V_i$ est la puissance mécanique fournie au système, sa puissance d'entrainement, et $P_{méca\text{-}int}$ est la puissance mécanique effectivement cédée au système électrique, qui est l'opposée de la puissance que le système oppose à son entrainement,
- les excitations des machines obtenues préférentiellement par des courants électriques $I_k$, et des flux magnétiques

$\Phi_k$, ou d'autres procédés équivalents (aimants permanents).

Toute l'information macroscopique et comportementale sur le système électrique est contenue dans la fonction d'état G et ses dérivées. En particulier il est avantageux de considérer l'énergie libre F :
$F=G+\Sigma_k\Phi_k I_k$ où $\Phi_k = -\partial G/\partial Ik$, qui coïncide avec l'énergie magnétique dans le cas d'un système électrique.

L'évolution du système électrique suit alors une tendance à la réversibilité caractérisée par :

$$\min(P_{meca\text{-}int} - dG/dt) = \min(P_{joule} + d/dt(\Sigma_k\Phi_k I_k))$$

Cette relation montre que l'énergie de couplage magnétique ($\Sigma_k\Phi_k I_k$) est consubstantielle à la génération et à la transmission d'électricité. Dans un mode préférentiel appelé régime linéaire, on montre : $\Sigma_k(\Phi_k I_k) = 2F = -2G$.

Finalement, cette approche thermodynamique du système électrique dans son ensemble, en prenant en compte les phénomènes de chaleur, de puissance électromagnétique et de puissance mécanique du système électrique, permet d'aboutir à l'équation suivante de conservation de la puissance du système électrique, dans un régime transitoire, entre tous les actionneurs du système électrique :

$$P_{meca\text{-}in} = P_{meca\text{-}out} + P_{Joule} + \frac{dF}{dt} + \frac{dE_{cin}}{dt} \qquad (1)$$

Où

- $E_{cin}$ désigne l'énergie cinétique des différents organes constituant le système électrique ;
- $P_{meca\text{-}in}$ désigne la puissance mécanique fournie au système par l'arbre des turbines des alternateurs ;
- $P_{meca\text{-}out}$ désigne la puissance mécanique produite par les moteurs, c'est-à-dire l'ensemble des éléments consommant l'électricité au niveau des unités de consommation d'électricité ;
- $P_{joule}$ représente la chaleur soutirée au système électrique ;
- F représente l'énergie libre telle que définie par la thermodynamique, qui est l'énergie magnétique dans le cas du système électrique.

Le bilan de puissance précédent permet de comprendre le fonctionnement du système électrique lors d'un changement brusque, comme par exemple une modification soudaine de la puissance mécanique fournie $P_{méca\text{-}ext}$, comme lors d'une brusque fluctuation de charge du système électrique. Dans un tel cas, le système électrique s'appuie dans un premier temps sur les variations de l'énergie magnétique F et de l'énergie cinétique $E_{cin}$, qui permettent un ajustement rapide des échanges de puissance du système électrique. Ces deux énergies magnétique et cinétique représentent des réserves d'énergie, emmagasinées (embarquées) au sein du système électrique, qui procurent de l'inertie au système électrique.

L'étude du régime transitoire du système électrique montre qu'il peut se décomposer en deux périodes distinctes relatives respectivement aux périodes de variation des réserves d'énergie magnétique et cinétique, dont les constantes de temps de relaxation diffèrent de plusieurs ordres de grandeurs. A titre d'exemple d'ordre de grandeur, la durée de la variation de l'énergie magnétique dure quelques millisecondes alors que la durée de la variation de l'énergie cinétique dure quelques secondes. Ces durées représentent les phénomènes survenant juste après la fluctuation de charge et offrent un temps de réaction possible au système électrique, pendant lequel l'unité de gestion 4 élabore et commande des réactions au niveau des actionneurs du système électrique pour lui permettre de stabiliser de nouveau les échanges de puissance. Ensuite, quand le régime nominal et stationnaire du système électrique est retrouvé, il reconstitue ses réserves d'énergie magnétique et cinétique pour pouvoir faire face à un prochain incident.

Ainsi, suite à une brusque fluctuation du fonctionnement du système électrique, dans un premier temps, le bilan de puissance permet de prendre en compte la variation de réserve magnétique seule, puis dans un second temps la variation de la réserve d'énergie cinétique seule.

Ainsi, dans un premier temps, le bilan de puissance (1) se résume à :

$$P_{meca\text{-}in} = P_{meca\text{-}out} + P_{Joule} + \frac{dF}{dt} \qquad (2)$$

Ensuite, dans un deuxième temps, ce bilan de puissance (1) s'écrit :

$$P_{meca\text{-}in} = P_{meca\text{-}out} + P_{Joule} + \frac{dE_{cin}}{dt} \qquad (3)$$

L'étude de ces deux régimes transitoires distincts permet de déterminer la durée des réserves d'énergie magnétique puis cinétique avant leur épuisement. Ces deux durées sont essentielles dans la gestion du système électrique, car elles lui permettent de posséder un temps d'adaptation en cas de modification de ses conditions de fonctionnement, pour retrouver un nouveau régime stationnaire stable. Ces deux durées représentent ainsi deux critères de stabilité d'un système électrique.

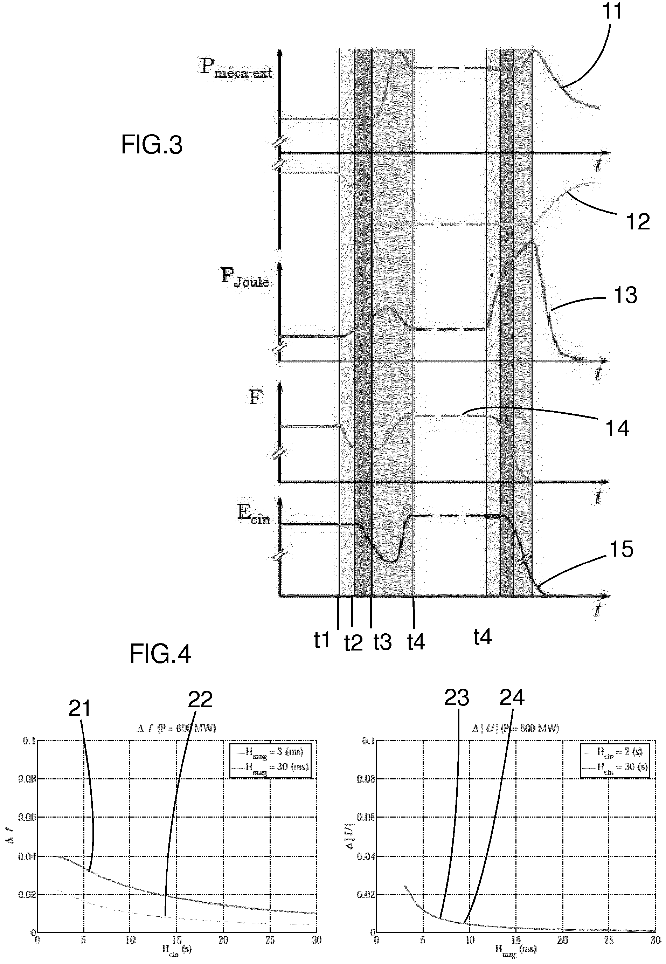

La figure 3 illustre schématiquement le comportement du système électrique. Ce système électrique comprend des premiers actionneurs des unités de production dont la courbe 11 représente l'évolution temporelle de la puissance mécanique fournie au système électrique. La courbe 12 représente l'évolution temporelle de la puissance consommée par les unités de consommation du système électrique. La courbe 13 représente l'évolution des pertes de chaleur ($P_{joule}$) en fonction du temps. Les courbes 14 et 15 représentent respectivement l'évolution des réserves d'énergie magnétique F et cinétique $E_{cin}$. A un premier instant t1, la courbe 12 qui était constante change brusquement de pente, ce qui correspond à une fluctuation de charge, une augmentation de la demande en électricité des unités de consommation du système électrique. Le système électrique s'adapte à l'instant t3, en augmentant sa production d'électricité, pour atteindre un nouvel équilibre stationnaire à l'instant t4. Entre les instants t1 et t3, les réserves d'énergie magnétique sont d'abord consommées, jusqu'à l'instant t2, puis les réserves d'énergie cinétique à partir de l'instant t2. Cette consommation de réserves d'énergie offre l'inertie suffisante au système électrique pour s'adapter à la fluctuation.

La partie droite de la figure 3 illustre ce qui se passerait si à un instant t5 survenait une défaillance particulière du réseau, du type fluctuation de charge ohmique, dans laquelle toutes les réserves cinétique et magnétique seraient épuisées sans que la production d'électricité ne parvienne à s'ajuster. Les réserves d'énergie seraient simplement dissipées par effet Joule sur le réseau de distribution d'électricité et l'ensemble du système électrique atteindrait une situation de défaillance, communément appelée par sa dénomination anglo-saxonne de « black out ».

Pour tenir compte des explications précédentes, le procédé de gestion d'un système électrique selon le mode d'exécution de l'invention définit deux paramètres de stabilité dynamique respectivement basés sur les durées liées aux réserves magnétiques et cinétiques explicitées précédemment. Ces paramètres de stabilité représentent la capacité du système électrique à maintenir la génération électrique et la transmission d'électricité, puis les variations de tension et de fréquence du réseau de distribution d'électricité dans des limites souhaitées.

Pour cela, les équations précédentes vont être exploitées pour étudier le comportement dynamique du système électrique pendant un régime transitoire imposé par une fluctuation de charge.

Nous rappelons que pendant la période transitoire électrique, entre les instants t1 et t2, l'équation (2) suivante est vérifiée :

$$\frac{dF(t)}{dt} = Pmeca\text{-}in - Pmeca\text{-}out - Pjoule$$

A partir de cette équation, nous introduisons le paramètre $H_{mag}$, qui est un temps qui s'exprime en seconde, qui mesure la durée pendant laquelle le stock d'énergie magnétique s'épuise totalement si toute la production du système électrique est stoppée ou déconnectée du système.

$$H_{mag} = \frac{F}{S}$$

Où S représente la puissance apparente nominale cumulée sur toutes les unités de production d'électricité de l'ensemble du système électrique.

Entre les instants t2 et t3, l'équation (3) est vérifiée :
La fréquence $\omega$ du système électrique évolue selon l'équation suivante :

$$\frac{dEcin(t)}{dt} = J\omega(t)\frac{d\omega(t)}{dt} = Pmeca\text{-}ext - Pmeca\text{-}int$$

Où Pmeca_ext et $P_{meca\_int}$ représentent respectivement les puissances externes et internes au système électrique.

A partir de cette équation, on introduit le paramètre Hein, explicité précédemment au niveau d'un alternateur, qui est un temps qui s'exprime en seconde, qui mesure la durée pendant laquelle le stock d'énergie cinétique s'épuise totalement si toute la production du système électrique est stoppée ou déconnectée du système.

$$H_{cin} = \frac{E_{cin}}{S} = \frac{J\,\omega_0^2}{S}$$

En introduisant ce paramètre dans l'équation précédente, on obtient :

$$\frac{d\,\omega(t)}{dt} = \frac{\omega_0^2}{\omega(t)H_{cin}\,S}(P_{meca\text{-}ext} - P_{meca\text{-}int})$$

Cette nouvelle formulation gouverne la variation de fréquence du réseau électrique après une fluctuation donnée : si $P_{meca\text{-}ext}$ , $Sn$ , $\omega_0$ , $P_{meca\text{-}int}$ sont fixés, la variation de fréquence dépend du paramètre Hein. En effet, la variation de fréquence après la fluctuation sera d'autant plus faible que ce paramètre Hein sera grand. Ce paramètre représente donc bien la fiabilité du système pour la variation de fréquence.

Suite aux explications précédentes, le procédé de gestion d'un système électrique selon un mode de réalisation comprend une étape d'estimation de la stabilité du système électrique en calculant les deux paramètres de stabilité représentant respectivement les réserves cinétique et magnétique du système électrique. En variante, la prise en compte d'une seule de ces réserves, comme la réserve d'énergie magnétique, peut représenter une approche simplifiée et utile aussi à l'analyse du système électrique.

Les deux paramètres de stabilité peuvent être estimés en fonction du temps, selon les plages horaires d'une journée, selon la saison.

Ces deux paramètres de stabilité sont, selon ce mode de réalisation, deux durées $H_{cin}$ et $H_{mag}$ telles que définies précédemment. En variante, toute autre valeur représentative de ces deux réserves pourrait être utilisée. Selon une première variante, les deux durées suivantes peuvent être considérées :

$$H'_{cin} = \frac{E_{cin}}{\Delta S} \quad \text{et} \quad H'_{mag} = \frac{F}{\Delta S}$$

Où $\Delta S$ représente une variation de puissance apparente du système électrique. Cette approche présente l'avantage plus réaliste de pouvoir correspondre avec des scenarii plus courants. Les durées ainsi définies représentent alors des durées pendant lesquelles le réseau reste sensiblement stable après une telle variation de puissance sous l'effet des réserves d'énergie cinétique et magnétique.

Selon une seconde variante, les paramètres de stabilité sont modifiés pour tenir compte du fait que le réseau électrique sera certainement fragile dans une situation de très forte demande électrique par les unités de consommation. Pour cela, les paramètres modifiés suivants peuvent être considérés :

$$H''_{cin} = \frac{E_{cin}}{\max(Peak - S; S)} \quad \text{et} \quad H''_{mag} = \frac{F}{\max(Peak - S; S)}$$

où :

- Peak désigne la puissance maximale en pointe délivrée par le réseau ; et
- S est la puissance apparente.

On pourra de la même manière que dans la version initiale considérer des fractions de ces grandeurs. Cette approche intègre au mieux la perte de génération et l'augmentation de la charge.

Selon une troisième variante, d'autres énergies du système électrique peuvent être considérées comme par exemple son enthalpie libre G ou une énergie de couplage.

Selon d'autres variantes encore, d'autres dimensions liées à ces réserves d'énergie que des durées peuvent être considérées.

De plus, les deux paramètres de stabilité peuvent être calculés selon les différentes approches suivantes :

- mise en œuvre d'un calcul théorique basé sur un modèle physique du système électrique, comme celui explicité par les équations précédentes ;

- mesure de ces paramètres lors du fonctionnement réel d'un système électrique ou d'un système électrique d'architecture similaire ; pour cela, le procédé comprend la mesure des caractéristiques de fonctionnement du système électrique à tout instant, et leur communication à l'unité de gestion ;

- mise en œuvre d'une approche combinée des deux approches ci-dessus.

L'approche précédente sert par exemple de support à la définition de l'architecture des futurs systèmes électriques, ainsi qu'à la modification des systèmes électriques existants. Elle permet de planifier l'évolution des systèmes électriques. En effet, elle permet de déterminer si les choix envisagés permettent ou non d'atteindre une stabilité satisfaisante. Notamment, elle permet de déterminer le pourcentage maximal de sources d'énergie renouvelable intermittentes 7 du système électrique, qui ne peuvent en effet dépasser un pourcentage limite du fait de leur non accumulation d'énergie magnétique et cinétique, et/ou elle permet de déterminer la nécessité d'intégrer des composants comme des volants d'inertie, des batteries, des condensateurs, des bobines supraconductrices, des machines synchrones additionnelles, etc.

Le procédé de gestion d'un système électrique considère une valeur seuil au-dessus de laquelle une valeur de $H_{cin}$ et/ou $H_{mag}$ d'un système électrique est considérée comme fiable. Cette valeur seuil peut être définie de manière théorique, en considérant comme hypothèse qu'un système électrique est fiable si sa réserve d'énergie cinétique et/ou magnétique lui permet une variation minimale de fréquence, ou d'une ou plusieurs autres grandeurs électriques, pendant une durée minimale imposée, par exemple 10 secondes. Au-dessus de cette valeur seuil, les variations de tension et de fréquence du réseau de distribution d'électricité restent dans des limites souhaitées et le système électrique est considéré comme stable. Selon une autre approche, cette valeur seuil est déterminée de manière empirique, à partir d'un système électrique considéré comme fiable, pour lequel les paramètres de stabilité sont calculés ou déterminés empiriquement, et servant de référence.

La figure 4 représente à titre d'exemple la sensibilité de variations de fréquence et de tension du système électrique en fonction des deux paramètres de stabilité Hein et $H_{mag}$ pour une puissance extérieure apportée de 600 MW. Les courbes 21 et 22 représentent les variations de fréquence en fonction du paramètre de stabilité Hein pour deux valeurs différentes du paramètre de stabilité $H_{mag}$. Les courbes 23 et 24 représentent les variations de tension en fonction du paramètre de stabilité $H_{cin}$ pour deux valeurs différentes du paramètre de stabilité $H_{mag}$. Ces deux courbes 23 et 24 sont confondues.

L'approche de stabilité présentée ci-dessus sert aussi à la gestion des systèmes électriques existants. Elle permet de comparer des paramètres représentant respectivement les réserves cinétique et magnétique du système électrique avec des seuils prédéfinis et si ces paramètres sont sous ces seuils, le procédé de gestion comprend la mise en œuvre de tout ou partie des actions suivantes :

- réduction de la consommation globale d'électricité ;

- augmentation de la production globale d'électricité ;

- mise en fonctionnement de dispositifs d'accumulation d'énergie cinétique et/ou magnétique, qui peuvent être certaines unités de production ou des dispositifs annexes spécialisés. En effet, l'accumulation des réserves d'énergie peut se faire par des composants appartenant à des unités de production du système électrique et/ou par des unités de stockage distinctes spécialisées du système électrique, comprenant un moment d'inertie important pour stocker de l'énergie cinétique, par exemple comprenant un volant d'inertie, et/ou comprenant une inductance particulière pour stocker de l'énergie magnétique.

Toutes ces étapes et actions du procédé de gestion d'un système électrique sont entreprises par l'unité de gestion du système électrique, notamment sous le pilotage de son calculateur, et mises en œuvre par au moins une commande transmise à une ou plusieurs entités du système électrique, les unités de production et/ou de consommation. Ces étapes se font automatiquement, les commandes mentionnées agissant sur des actionneurs permettant de modifier la production des unités de production et/ou la consommation des unités de consommation et/ou le stockage d'unités annexes de stockage d'énergie.

**Revendications**

1. Procédé de gestion d'un système électrique comprenant des unités de production d'électricité (1), des unités de consommation d'électricité (2), et un réseau de distribution d'électricité (3) reliant les unités de production d'électricité (1) aux unités de consommation d'électricité (2), **caractérisé en ce qu'**il comprend :

   - une étape de mesure et/ou d'estimation de grandeurs de fonctionnement du système électrique par au moins un capteur et/ou un composant logiciel et/ou matériel, comme des grandeurs électriques du système électrique comme la fréquence et la tension,
   - une étape d'estimation d'au moins un paramètre de stabilité du système électrique basé sur la réserve d'énergie magnétique et la réserve d'énergie cinétique qu'il accumule, à partir d'un calcul mis en œuvre par au moins composant logiciel et/ou matériel d'une unité de gestion (4) du système électrique prenant en compte au moins une mesure et/ou estimation d'une grandeur de fonctionnement du système électrique,

   **en ce qu'**il comprend une étape de calcul du ou des paramètres de stabilité du système électrique par l'intermédiaire d'au moins un capteur et/ou un composant logiciel et/ou matériel à partir du bilan de puissance du système électrique, puis **en ce qu'**il comprend une étape d'analyse de deux régimes transitoires distincts, un régime transitoire durant lequel le bilan de puissance considère la variation de l'énergie magnétique du système électrique à énergie cinétique considérée constante, et un régime transitoire durant lequel le bilan de puissance considère la variation de l'énergie cinétique du système électrique à énergie magnétique considérée constante, et **caractérisé en ce que** le bilan de puissance du système électrique est calculé à partir d'une modélisation thermodynamique du système électrique et se définit par l'équation suivante :

   $$P_{meca\text{-}in} = P_{meca\text{-}out} + P_{Joule} + \frac{dF}{dt} + \frac{dE_{cin}}{dt}$$

   Où

   - $E_{cin}$ désigne l'énergie cinétique emmagasinée dans les différents organes du système électrique ;
   - $P_{meca\text{-}in}$ désigne la puissance mécanique fournie au système par l'arbre des turbines des alternateurs ;
   - $P_{meca\text{-}out}$ désigne la puissance mécanique produite par les moteurs;
   - $P_{joule}$ représente la chaleur soutirée au système électrique ;
   - $F$ représente l'énergie magnétique emmagasinée dans les différents organes du système électrique.

2. Procédé de gestion d'un système électrique selon la revendication précédente, **caractérisé en ce qu'**il comprend la mise en œuvre d'une étape de régulation automatique du réseau de distribution du système électrique à partir d'au moins un paramètre de stabilité du système électrique basé sur la réserve magnétique et/ou cinétique accumulée.

3. Procédé de gestion d'un système électrique selon l'une des revendications précédentes, **caractérisé en ce qu'**il comprend la mise en œuvre de tout ou partie des actions suivantes, de manière automatique par une transmission d'instructions par au moins un composant logiciel et/ou matériel d'une unité de gestion (4) du système électrique par l'intermédiaire d'un dispositif de communication (5), en fonction d'au moins un paramètre de stabilité du système électrique basé sur la réserve magnétique et/ou cinétique qu'il accumule :

   - réduction de la consommation globale d'électricité ;
   - augmentation de la production globale d'électricité ;
   - mise en fonctionnement ou arrêt d'un ou plusieurs dispositifs d'accumulation d'énergie cinétique et/ou magnétique.

4. Procédé de gestion d'un système électrique selon l'une des revendications précédentes, **caractérisé en ce qu'**il prend en compte les deux paramètres de stabilité du système électrique qui représentent respectivement la durée pendant laquelle les réserves d'énergie magnétique et cinétique du système électrique s'épuisent totalement ou partiellement, si toute la production d'électricité du système électrique est stoppée ou déconnectée du système électrique ou si le système électrique subit une fluctuation.

5. Procédé de gestion d'un système électrique selon la revendication précédente, **caractérisé en ce que** les deux paramètres de stabilité $H_{cin}$ et $H_{mag}$ du système électrique sont définis de la manière suivante :

$$H_{cin} = \frac{E_{cin}}{S} \quad \text{et} \quad H_{mag} = \frac{F}{S}$$

où

$E_{cin}$ désigne l'énergie cinétique des différents organes constituant le système électrique,
F représente l'énergie magnétique des différents organes constituant le système électrique,
S désigne la puissance apparente nominale des différents organes de génération d'électricité du système électrique,
ou **en ce que** les deux paramètres de stabilité $H'_{cin}$ et $H'_{mag}$ du système électrique sont définis de la manière suivante :

$$H'_{cin} = \frac{E_{cin}}{\Delta S} \quad \text{et} \quad H'_{mag} = \frac{F}{\Delta S}$$

où $\Delta S$ représente une variation de puissance apparente du système électrique
ou **en ce que** les deux paramètres de stabilité $H''_{cin}$ et $H''_{mag}$ du système électrique sont définis de la manière suivante :

$$H''_{cin} = \frac{E_{cin}}{\max(Peak - S;S)} \quad \text{et} \quad H''_{mag} = \frac{F}{\max(Peak - S;S)}$$

où :

- Peak désigne la puissance maximale en pointe délivrée par le réseau ; et
- S est la puissance apparente.

**6.** Procédé de gestion d'un système électrique selon la revendication 4 ou 5, **caractérisé en ce que** les deux paramètres de stabilité du système électrique sont définis à partir des caractéristiques des alternateurs des unités de production d'électricité du système électrique connectés au système électrique.

**7.** Procédé de gestion d'un système électrique selon l'une des revendications précédentes, **caractérisé en ce qu'**il comprend une étape de mesure de grandeurs de fonctionnement du système électrique par des capteurs, comme des grandeurs électriques du système électrique comme la fréquence et la tension, et **en ce que** l'étape d'estimation d'au moins un paramètre de stabilité du système électrique basé sur la réserve magnétique et/ou cinétique qu'il accumule prend en compte au moins une mesure d'une grandeur de fonctionnement mesurée du système électrique et/ou **en ce que** l'étape d'estimation d'au moins un paramètre de stabilité du système électrique basé sur la réserve magnétique et/ou cinétique qu'il accumule prend en compte au moins une estimation de la réserve magnétique et/ou cinétique sur une ou plusieurs sous-partie(s) du système électrique pour en déduire finalement la réserve magnétique et/ou cinétique globale cumulée du système électrique.

**8.** Procédé de gestion d'un système électrique selon l'une des revendications précédentes, **caractérisé en ce qu'**il comprend une étape de comparaison du ou des paramètre(s) de stabilité du système électrique basé sur la réserve magnétique et/ou cinétique qu'il accumule avec une valeur seuil pour déterminer si le système électrique est suffisamment stable.

**9.** Procédé de gestion d'un système électrique selon la revendication précédente, **caractérisé en ce que** la valeur seuil est calculée de manière théorique, en considérant comme hypothèse qu'un système électrique est fiable si sa réserve d'énergie magnétique et/ou cinétique lui permet une variation minimale de fréquence et/ou de tension, ou d'une ou de plusieurs autres grandeurs électriques, pendant une durée minimale imposée, ou **en ce que** cette valeur seuil est déterminée de manière empirique, à partir d'un système électrique considéré comme fiable, pour lequel le ou les paramètres de stabilité sont connus et servent de référence.

**10.** Procédé de gestion d'un système électrique selon l'une des revendications précédentes, **caractérisé en ce qu'**il comprend la définition de l'architecture d'un nouveau système électrique ou de la modification d'un système électrique existant en fonction de l'estimation d'au moins un paramètre de stabilité du système électrique basé sur la réserve magnétique et/ou cinétique qu'il accumulera.

**11.** Procédé de gestion d'un système électrique selon la revendication précédente, **caractérisé en ce qu'**il détermine le taux maximal acceptable des unités de production d'électricité renouvelable intermittente (7), comme à base d'énergie éolienne et/ou solaire, en fonction de l'estimation d'au moins un paramètre de stabilité du système électrique basé sur la réserve magnétique et/ou cinétique qu'il accumulera.

**12.** Procédé de gestion d'un système électrique selon la revendication précédente, **caractérisé en ce qu'**il comprend une étape de planification de l'évolution d'un système électrique de sorte qu'il possède au moins un paramètre de stabilité basé sur la réserve magnétique et/ou cinétique qu'il accumulera au-dessus d'un seuil.

**13.** Programme informatique comprenant un moyen de codes adapté à la réalisation des étapes d'un procédé de gestion d'un système électrique selon l'une des revendications précédentes lorsque le programme informatique est exécuté sur un calculateur.

**14.** Unité de gestion (4) d'un système électrique, **caractérisée en ce qu'**elle comprend un calculateur qui met en œuvre un procédé de gestion d'un système électrique selon l'une des revendications 1 à 12.

**15.** Système électrique comprenant des unités de production d'électricité (1), des unités de consommation d'électricité (2), et un réseau de distribution d'électricité (3) reliant les unités de production d'électricité (1) aux unités de consommation d'électricité (2), **caractérisé en ce qu'**il comprend une unité de gestion (4) selon la revendication 14.

**16.** Système électrique selon la revendication précédente, **caractérisé en ce qu'**il comprend des dispositifs de communication (5) pour la transmission vers l'unité de gestion (4) des mesures de grandeurs électriques provenant de capteurs du système électrique et pour la transmission de l'unité de gestion (4) de commandes à des actionneurs du système électrique.


**Patentansprüche**

**1.** Verfahren zum Verwalten eines elektrischen Systems, das Erzeugungseinheiten für elektrische Energie (1), Verbrauchseinheiten für elektrische Energie (2) und ein Verteilungsnetz für elektrische Energie (3) aufweist, welches die Erzeugungseinheiten für elektrische Energie (1) mit den Verbrauchseinheiten für elektrische Energie (2) verbindet, **dadurch gekennzeichnet, dass** es Folgendes aufweist:

- einen Schritt zum Messen und/oder Schätzen von Betriebsgrößen des elektrischen Systems durch mindestens einen Sensor und/oder eine Software- und/oder Hardwarekomponente, wie etwa elektrische Größen des elektrischen Systems wie Frequenz und Spannung,
- einen Schritt zum Schätzen mindestens eines Stabilitätsparameters des elektrischen Systems auf der Grundlage der magnetischen Energiereserve und der kinetischen Energiereserve, die es akkumuliert, ausgehend von einer Berechnung, die von mindestens einer Software- und/oder Hardwarekomponente einer Verwaltungseinheit (4) des elektrischen Systems unter Berücksichtigung mindestens einer Messung und/oder Schätzung einer Betriebsgröße des elektrischen Systems durchgeführt wird,

und dass es einen Schritt zum Berechnen des oder der Stabilitätsparameter(s) des elektrischen Systems mithilfe von mindestens einem Sensor und/oder einer Software- und/oder Hardwarekomponente ausgehend von der Leistungsbilanz des elektrischen Systems aufweist, und dass es darüber hinaus einen Schritt zum Analysieren von zwei unterschiedlichen Übergangszuständen aufweist, nämliche einen Übergangszustand, bei dem die Leistungsbilanz die Veränderung der magnetischen Energie des elektrischen Systems bei einer als konstant angesehenen kinetischen Energie berücksichtigt, und einen Übergangszustand, bei dem die Leistungsbilanz die Veränderung der kinetischen Energie des elektrischen Systems bei einer als konstant angesehenen magnetischen Energie berücksichtigt, und **dadurch gekennzeichnet, dass** die Leistungsbilanz des elektrischen Systems anhand eines thermodynamischen Modells des elektrischen Systems berechnet wird und durch die folgende Gleichung definiert ist:

$$P_{meca\text{-}in} = P_{meca\text{-}out} + P_{Joule} + \frac{dF}{dt} + \frac{dE_{cin}}{dt}$$

Wobei

- $E_{cin}$ die kinetische Energie ist, die in den verschiedenen Komponenten des elektrischen Systems gespeichert ist;
- $P_{meca\text{-}in}$ die mechanische Leistung ist, die von der Turbinenwelle der Generatoren in das System eingespeist wird;
- $P_{meca\text{-}out}$ die von den Motoren erzeugte mechanische Leistung ist;
- $P_{joule}$ die dem elektrischen System entzogene Wärme ist;
- F die magnetische Energie ist, die in den verschiedenen Komponenten des elektrischen Systems gespeichert ist.

**2.** Verfahren zum Verwalten eines elektrischen Systems nach dem vorhergehenden Anspruch, **dadurch gekennzeichnet, dass** es die Durchführung eines Schritts zur automatischen Regelung des Verteilungsnetzes des elektrischen Systems ausgehend von mindestens einem Stabilitätsparameter des elektrischen Systems auf der Grundlage der akkumulierten magnetischen und/oder kinetischen Reserve aufweist.

**3.** Verfahren zum Verwalten eines elektrischen Systems nach einem der vorhergehenden Ansprüche, **dadurch gekennzeichnet, dass** es die Durchführung aller oder einiger der folgenden Aktionen aufweist, und zwar automatisch durch eine Übertragung von Anweisungen durch mindestens eine Software- und/oder Hardwarekomponente einer Verwaltungseinheit (4) des elektrischen Systems mithilfe einer Kommunikationsvorrichtung (5) in Abhängigkeit von mindestens einem Stabilitätsparameter des elektrischen Systems auf der Grundlage der von ihm akkumulierten magnetischen und/oder kinetischen Reserve:

- Senken des Gesamtverbrauchs elektrischer Energie;
- Erhöhen der Gesamtproduktion elektrischer Energie;
- Einschalten oder Ausschalten einer oder mehrerer Vorrichtungen zur Speicherung kinetischer und/oder magnetischer Energie.

**4.** Verfahren zum Verwalten eines elektrischen Systems nach einem der vorhergehenden Ansprüche, **dadurch gekennzeichnet, dass** es die zwei Stabilitätsparameter des elektrischen Systems berücksichtigt, die jeweils die Zeit angeben, in der sich die magnetische und kinetische Energiereserve des elektrischen Systems ganz oder teilweise entleert, wenn die gesamte Erzeugung elektrischer Energie des elektrischen Systems gestoppt oder vom elektrischen System getrennt wird oder wenn das elektrische System eine Schwankung erfährt.

**5.** Verfahren zum Verwalten eines elektrischen Systems nach dem vorhergehenden Anspruch, **dadurch gekennzeichnet, dass** die zwei Stabilitätsparameter $H_{cin}$ und $H_{mag}$ des elektrischen Systems folgendermaßen definiert sind:

$$H_{cin} = \frac{E_{cin}}{S} \quad und \quad H_{mag} = \frac{F}{S}$$

wobei

$E_{cin}$ die kinetische Energie der verschiedenen Komponenten ist, die das elektrische System bilden,
F die magnetische Energie der verschiedenen Komponenten ist, die das elektrische System bilden,
S die Nennscheinleistung der verschiedenen Komponenten zur Erzeugung elektrischer Energie des elektrischen Systems ist,
oder **dadurch gekennzeichnet, dass** die zwei Stabilitätsparameter $H'_{cin}$ und $H'_{mag}$ des elektrischen Systems folgendermaßen definiert sind:

$$H'_{cin} = \frac{E_{cin}}{\Delta S} \quad und \quad H'_{mag} = \frac{F}{\Delta S}$$

wobei $\Delta S$ für eine Änderung der Scheinleistung des elektrischen Systems steht,
oder **dadurch gekennzeichnet, dass** die zwei Stabilitätsparameter $H''_{cin}$ und $H''_{mag}$ des elektrischen Systems

folgendermaßen definiert sind:

$$H''_{cin} = \frac{E_{cin}}{\max(Peak - S; S)} \quad \text{und} \quad H''_{mag} = \frac{F}{\max(Peak - S; S)}$$

wobei:

- Peak die maximale vom Netz gelieferte Spitzenleistung ist und
- S die Scheinleistung ist.

6. Verfahren zum Verwalten eines elektrischen Systems nach Anspruch 4 oder 5, **dadurch gekennzeichnet, dass** die zwei Stabilitätsparameter des elektrischen Systems anhand der Eigenschaften der Generatoren der an das elektrische System angeschlossenen Erzeugungseinheiten für elektrische Energie des elektrischen Systems definiert sind.

7. Verfahren zum Verwalten eines elektrischen Systems nach einem der vorhergehenden Ansprüche, **dadurch gekennzeichnet, dass** es einen Schritt zum Messen von Betriebsgrößen des elektrischen Systems durch Sensoren aufweist, wie etwa elektrische Größen des elektrischen Systems wie Frequenz und Spannung, und dadurch, dass der Schritt zum Schätzen mindestens eines Stabilitätsparameters des elektrischen Systems auf der Grundlage der magnetischen und/oder kinetischen Reserve, die es akkumuliert, mindestens eine Messung einer gemessenen Betriebsgröße des elektrischen Systems berücksichtigt, und/oder dadurch, dass der Schritt zum Schätzen mindestens eines Stabilitätsparameters des elektrischen Systems auf der Grundlage der magnetischen und/oder kinetischen Reserve, die es akkumuliert, mindestens eine Schätzung der magnetischen und/oder kinetischen Reserve auf einem oder mehreren Unterbereich(en) des elektrischen Systems berücksichtigt, um daraus schließlich die gesamte akkumulierte magnetische und/oder kinetische Reserve des elektrischen Systems abzuleiten.

8. Verfahren zum Verwalten eines elektrischen Systems nach einem der vorhergehenden Ansprüche, **dadurch gekennzeichnet, dass** es einen Schritt zum Vergleichen des oder der Stabilitätsparameter(s) des elektrischen Systems auf der Grundlage der von ihm akkumulierten magnetischen und/oder kinetischen Reserve mit einem Schwellenwert aufweist, um festzustellen, ob das elektrische System ausreichend stabil ist.

9. Verfahren zum Verwalten eines elektrischen Systems nach dem vorhergehenden Anspruch, **dadurch gekennzeichnet, dass** der Schwellenwert theoretisch berechnet wird, wobei davon ausgegangen wird, dass ein elektrisches System zuverlässig ist, wenn seine magnetische und/oder kinetische Energiereserve für eine festgelegte Mindestzeitspanne eine minimale Schwankung der Frequenz und/oder der Spannung zulässt, oder von einer oder mehrerer anderer elektrischer Größen, oder **dadurch gekennzeichnet, dass** dieser Schwellenwert empirisch anhand eines als zuverlässig geltenden elektrischen Systems bestimmt wird, für das der/die Stabilitätsparameter bekannt sind und als Referenz dienen.

10. Verfahren zum Verwalten eines elektrischen Systems nach einem der vorhergehenden Ansprüche, **dadurch gekennzeichnet, dass** es die Definition der Architektur eines neuen elektrischen Systems oder der Modifikation eines vorhandenen elektrischen Systems in Abhängigkeit von der Schätzung mindestens eines Stabilitätsparameters des elektrischen Systems auf der Grundlage der magnetischen und/oder kinetischen Reserve, die es akkumulieren wird, aufweist.

11. Verfahren zum Verwalten eines elektrischen Systems nach dem vorhergehenden Anspruch, **dadurch gekennzeichnet, dass** es die maximal akzeptable Rate der Erzeugungseinheiten für intermittierende erneuerbare Energie (7) bestimmt, wie z. B. Wind- und/oder Sonnenenergie, in Abhängigkeit von der Schätzung mindestens eines Stabilitätsparameters des elektrischen Systems auf der Grundlage der magnetischen und/oder kinetischen Reserve, die es akkumulieren wird.

12. Verfahren zum Verwalten eines elektrischen Systems nach dem vorhergehenden Anspruch, **dadurch gekennzeichnet, dass** es einen Schritt zum Planen der Entwicklung eines elektrischen Systems aufweist, sodass es mindestens einen Stabilitätsparameter auf der Grundlage der magnetischen und/oder kinetischen Reserve aufweist, die es über eine Schwelle hinaus akkumulieren wird.

13. Computerprogramm mit Anweisungen, die ausgebildet sind, die Schritte eines Verfahrens zum Verwalten eines elektrischen Systems nach einem der vorhergehenden Ansprüche auszuführen, wenn das Computerprogramm auf einem Rechner ausgeführt wird.

14. Verwaltungseinheit (4) eines elektrischen Systems, **dadurch gekennzeichnet, dass** es einen Rechner aufweist, der ein Verfahren zur Verwaltung eines elektrischen Systems nach einem der Ansprüche 1 bis 12 durchführt.

15. Elektrisches System, das Erzeugungseinheiten für elektrische Energie (1), Verbrauchseinheiten für elektrische Energie (2) und ein Verteilungsnetz für elektrische Energie (3) aufweist, welches die Erzeugungseinheiten für elektrische Energie (1) mit den Verbrauchseinheiten für elektrische Energie (2) verbindet, **dadurch gekennzeichnet, dass** es eine Verwaltungseinheit (4) nach Anspruch 14 aufweist.

16. Elektrisches System nach dem vorhergehenden Anspruch, **dadurch gekennzeichnet, dass** es Kommunikationsvorrichtungen (5) zum Übertragen der Messungen der elektrischen Größen von den Sensoren des elektrischen Systems an die Verwaltungseinheit (4) aufweist und zum Übertragen von Befehlen an die Stellglieder des elektrischen Systems ausgehend von der Verwaltungseinheit (4).

**Claims**

1. Method for managing an electrical system comprising electricity production units (1), electricity consumption units (2), and an electricity distribution network (3) linking the electricity production units (1) to the electricity consumption units (2), **characterized in that** it comprises:

  - a step of measurement and/or estimation of operating quantities for the electrical system by at least one sensor and/or a software and/or hardware component, such as electrical quantities for the electrical system such as frequency and voltage,
  - a step of estimation of at least one stability parameter for the electrical system that is based on the magnetic energy reserve and kinetic energy reserve that it accumulates, from a calculation implemented by at least one software and/or hardware component of a management unit (4) of the electrical system taking into account at least one measurement and/or estimation of an operating quantity for the electrical system,

  **in that** it comprises a step of calculation of the stability parameter(s) of the electrical system by means of at least one sensor and/or a software and/or hardware component from the power budget of the electrical system, then **in that** it comprises a step of analysis of two separate transitory regimes, one transitory regime during which the power budget considers the variation in the magnetic energy of the electrical system at constant kinetic energy under consideration, and one transitory regime during which the power budget considers the variation in the kinetic energy of the electrical system at constant magnetic energy under consideration, and **characterized in that** the power budget of the electrical system is calculated from thermodynamic modelling of the electrical system and is defined by the following equation:

$$P_{meca\text{-}in} = P_{meca\text{-}out} + P_{Joule} + \frac{dF}{dt} + \frac{dE_{cin}}{dt}$$

where

  - $E_{cin}$ denotes the kinetic energy stored in the various parts of the electrical system;
  - $P_{meca\text{-}in}$ denotes the mechanical power supplied to the system by the shaft of the turbines of the alternators;
  - $P_{meca\text{-}out}$ denotes the mechanical power produced by the motors;
  - $P_{joule}$ represents the heat extracted from the electrical system;
  - $F$ represents the magnetic energy stored in the various parts of the electrical system.

2. Method for managing an electrical system according to the preceding claim, **characterized in that** it comprises the implementation of a step of automatic regulation of the distribution network of the electrical system from at least one stability parameter for the electrical system that is based on the accumulated magnetic and/or kinetic reserve.

3. Method for managing an electrical system according to either of the preceding claims, **characterized in that** it comprises the implementation of all or some of the following actions, automatically by transmission of instructions by at least one software and/or hardware component of a management unit (4) of the electrical system by means of a communication device (5), on the basis of at least one stability parameter for the electrical system that is based on the magnetic and/or kinetic reserve that it accumulates:

- reduction in overall electricity consumption;
- increase in overall electricity production;
- start-up or stopping of one or more kinetic and/or magnetic energy accumulation devices.

4. Method for managing an electrical system according to one of the preceding claims, **characterized in that** it takes into account the two stability parameters of the electrical system that respectively represent the duration for which the magnetic and kinetic energy reserves of the electrical system are being totally or partially exhausted, whether the whole electricity production of the electrical system is stopped or disconnected from the electrical system or whether the electrical system is undergoing a fluctuation.

5. Method for managing an electrical system according to the preceding claim, **characterized in that** the two stability parameters $H_{cin}$ and $H_{mag}$ of the electrical system are defined as follows:

$$H_{cin} = \frac{E_{cin}}{S} \quad \text{and} \quad H_{mag} = \frac{F}{S}$$

where

$E_{cin}$ denotes the kinetic energy of the various parts constituting the electrical system,
F represents the magnetic energy of the various parts constituting the electrical system,
S denotes the nominal apparent power of various electricity generation parts of the electrical system,
or **in that** the two stability parameters $H'_{cin}$ and $H'_{mag}$ of the electrical system are defined as follows:

$$H'_{cin} = \frac{E_{cin}}{\Delta S} \quad \text{and} \quad H'_{mag} = \frac{F}{\Delta S}$$

where $\Delta S$ represents an apparent power variation for the electrical system
or **in that** the two stability parameters $H''_{cin}$ and $H''_{mag}$ of the electrical system are defined as follows:

$$H''_{cin} = \frac{E_{cin}}{\max(Peak - S; S)} \quad \text{and} \quad H''_{mag} = \frac{F}{\max(Peak - S; S)}$$

where:

- Peak denotes the peak maximum power delivered by the network; and
- S is the apparent power.

6. Method for managing an electrical system according to Claim 4 or 5, **characterized in that** the two stability parameters of the electrical system are defined from the features of the alternators of the electricity production units of the electrical system, which alternators are connected to the electrical system.

7. Method for managing an electrical system according to one of the preceding claims, **characterized in that** it comprises a step of measurement of operating quantities for the electrical system by sensors, such as electrical quantities for the electrical system such as frequency and voltage, and **in that** the step of estimation of at least one stability parameter for the electrical system that is based on the magnetic and/or kinetic reserve that it accumulates takes into account at least one measurement of a measured operating quantity for the electrical system and/or **in that** the step of estimation of at least one stability parameter for the electrical system that is based on the magnetic and/or kinetic reserve that it accumulates takes into account at least one estimation of the magnetic and/or kinetic reserve on one or more subportion(s) of the electrical system in order to finally deduce therefrom the overall accumulated magnetic and/or kinetic reserve of the electrical system.

8. Method for managing an electrical system according to one of the preceding claims, **characterized in that** it comprises a step of comparison of the stability parameter(s) of the electrical system that is based on the magnetic and/or kinetic reserve that it accumulates with a threshold value in order to determine whether the electrical system is sufficiently stable.

9. Method for managing an electrical system according to the preceding claim, **characterized in that** the threshold value is calculated theoretically, by considering as an assumption that an electrical system is reliable if its magnetic and/or kinetic energy reserve allows it a minimum variation in frequency and/or voltage, or in one or more other electrical quantities, for an imposed minimum duration, or **in that** this threshold value is determined empirically, from an electrical system that is considered to be reliable, for which the stability parameter(s) is/are known and serve(s) as a reference.

10. Method for managing an electrical system according to one of the preceding claims, **characterized in that** it comprises the definition of the architecture of a new electrical system or of the modification of an existing electrical system on the basis of the estimation of at least one stability parameter for the electrical system that is based on the magnetic and/or kinetic reserve that it will accumulate.

11. Method for managing an electrical system according to the preceding claim, **characterized in that** it determines the maximum acceptable level of the intermittent renewable electricity production units (7), such as based on wind and/or solar energy, on the basis of the estimation of at least one stability parameter for the electrical system that is based on the magnetic and/or kinetic reserve that it will accumulate.

12. Method for managing an electrical system according to the preceding claim, **characterized in that** it comprises a step of planning of the development of an electrical system such that it has at least one stability parameter that is based on the magnetic and/or kinetic reserve that it will accumulate above a threshold.

13. Computer program comprising a code means suited to realizing the steps of a method for managing an electrical system according to one of the preceding claims when the computer program is executed on a computer.

14. Management unit (4) of an electrical system, **characterized in that** it comprises a computer that implements a method for managing an electrical system according to one of Claims 1 to 12.

15. Electrical system comprising electricity production units (1), electricity consumption units (2), and an electricity distribution network (3) linking the electricity production units (1) to the electricity consumption units (2), **characterized in that** it comprises a management unit (4) according claim 14.

16. Electrical system according to the preceding claim, **characterized in that** it comprises communication devices (5) for transmitting measurements of electrical quantities from sensors of the electrical system to the management unit (4) and for transmitting commands from the management unit (4) to actuators of the electrical system.

FIG.1

## FIG.2

FIG.3

FIG.4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2330525 A
- EP 2224570 A
- EP 2327149 A
- US 20030200010 A